Europäisches Patentamt

European Patent Office

Office européen des brevets

(19)

(11) Veröffentlichungsnummer : **0 024 595**
**B1**

(12) **EUROPÄISCHE PATENTSCHRIFT**

(45) Veröffentlichungstag der Patentschrift :
03.02.82

(21) Anmeldenummer : 80104649.1

(22) Anmeldetag : 06.08.80

(51) Int. Cl.³ : **B 01 D 53/02,** F 04 C 29/02,
F 01 C 21/04

(54) Verfahren zur Entfernung von Schmiermittelnebeln und Schmiermitteldämpfen aus einem Gasstrom.

(30) Priorität : 30.08.79 DE 2935147

(43) Veröffentlichungstag der Anmeldung :
11.03.81 (Patentblatt 81/10)

(45) Bekanntmachung des Hinweises auf die Patenterteilung : 03.02.82 Patentblatt 82/05

(84) Benannte Vertragsstaaten :
AT BE CH DE FR GB IT LI NL SE

(56) Entgegenhaltungen :
BE - A - 555 920
FR - A - 2 142 706
GB - A - 833 991

(73) Patentinhaber : Linde Aktiengesellschaft
Abraham-Lincoln-Strasse 21
D-6200 Wiesbaden (DE)

(72) Erfinder : Benkmann, Christian
Meisenstrasse 39
D-8032 Gräfelfing (DE)

(74) Vertreter : Schaefer, Gerhard, Dr.
Linde Aktiengesellschaft Zentrale Patentabteilung
D-8023 Höllriegelskreuth (DE)

Imprimerie Jouve, 18, rue St-Denis, 75001 Paris, France

## Verfahren zur Entfernung von Schmiermittelnebeln und Schmiermitteldämpfen aus einem Gasstrom

Die Erfindung betrifft ein Verfahren zur Entfernung von Schmiermittelnebeln und Schmiermitteldämpfen aus einem verdichteten Gas unter Verwendung eines Ölfilters und eines Adsorbers.

Bei der Verdichtung von Gasen oder Gasgemischen ist es häufig erforderlich, einen ölfreien Gasstrom erhöhten Drucks zu erhalten, da im Gas enthaltene Öldämpfe oder Ölnebel sich als Störfaktoren erweisen. Eine solche Störung kann beispielsweise darin bestehen, daß bei einer nachfolgenden Aufarbeitung des Gases in einer Tieftemperaturanlage Feststoffausscheidungen erfolgen oder auch einfach darin, daß das verdichtete Gas unmittelbar einer Verwendung zugeführt werden soll, bei der bestimmte Reinheitsanforderungen einzuhalten sind.

In vielen Fällen ist es deshalb erforderlich, bei der Verdichtung auf ölfreie Kompressoren zurückzugreifen, da bei Verwendung eines ölgeschmierten Kompressors auch durch eine Ölabscheidung mittels eines Filtersystems sowie einer Entfernung von Öldämpfen durch Adsorber nicht die nötige Reinheit des Gases erreicht werden kann. Bei einer Ölabscheidung mit Filtersystemen bleibt nämlich immer noch ein Restgehalt an Nebeltröpfchen im Gas enthalten. Dieser Restgehalt, der beispielsweise 1 % des ursprünglich vorhandenen Ölnebels ausmachen kann, wird auch in einem nachgeschalteten Adsorber kaum reduziert, da dieser nahezu keine Wirkung bezüglich Nebel zeigt.

Der Erfindung liegt deshalb die Aufgabe zugrunde, ein Verfahren der eingangs genannten Art so auszugestalten, daß eine vollständige Abtrennung von Schmiermittelnebeln und Schmiermitteldämpfen aus einem verdichteten Gas möglich ist.

Diese Aufgabe wird dadurch gelöst, daß das Gas nach Durchlaufen des Ölfilters soweit erwärmt wird, daß noch enthaltener Ölnebel vollständig verdampft, bevor das Gas durch den Adsorber geleitet wird.

Damit wird erfindungsgemäß ein einfaches Verfahren vorgeschlagen, das gegenüber dem herkömmlichen Verfahren mit Ölfilter und Adsorber lediglich einen Erhitzer zwischen dem Ölfilter und dem Adsorber benötigt. Da die für die Verdampfung des im Ölfilter nicht zurückgehaltenen Ölnebels benötigte Wärmemenge überraschend gering ist, läßt sich dieses Verfahren ohne einen wesentlich erhöhten Energieaufwand durchführen.

In einer besonders günstigen Ausgestaltung der Erfindung wird das aus dem Ölabscheider austretende Gas durch Wärmetausch mit dem aus dem Kompressor austretenden Gas angewärmt. Die Kompressionswärme, die üblicherweise durch Kühlung gegen Kühlwasser oder Luft ungenutzt abgegeben wird, wird dabei an den zu erhitzenden Gasstrom übertragen, so daß die für die Erhitzung des Gases benötigte Energie hierdurch weitgehend bereitgestellt wird. Wie sich gezeigt hat, ist nämlich das bei der Verdichtung erreichte Temperaturniveau von beispielsweise 100 bis 120 °C in den meisten Fällen ausreichend, um eine vollständige Verdampfung des nach dem Ölabscheider verbliebenen Ölnebels im Gas sicherzustellen.

Eine günstige Weiterbildung des erfindungsgemäßen Verfahrens sieht vor, daß das aus dem Ölfilter austretende Gas zunächst gegen aus dem Adsorber austretendes Gas vorgewärmt wird. Durch diese Verfahrensführung wird nicht nur ein eventuell erforderlicher, von außen zuzuführender Energiebedarf für die Anwärmung reduziert, sondern darüber hinaus auch das aus dem Adsorber austretende Gas gekühlt, was in vielen Fällen ohnehin erforderlich ist.

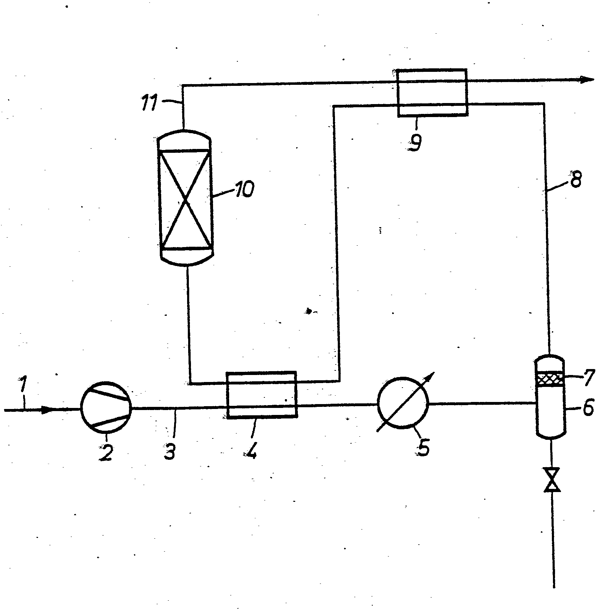

Weitere Einzelheiten der Erfindung sind nachfolgend anhand eines in der Figur schematisch dargestellten Ausführungsbeispiels erläutert.

Ein zu verdichtendes Gas wird über Leitung 1 einem Kompressor 2 zugeführt, aus dem es als ölhaltiges Gas über Leitung 3 abgezogen wird. Nach Kühlung in einem Wärmetauscher 4 gegen anzuwärmendes Gas wird es in einem weiteren Wärmetauscher 5 gegen Kühlwasser weiter abgekühlt, um im nachfolgenden Ölabscheider 6 eine möglichst vollständige Abtrennung des Ölnebels zu erreichen. Der mit Nebelfiltern 7 ausgestattete Ölabscheider 6 ist herkömmlicher Bauart und hält beispielsweise 99 % des im Gas enthaltenen Ölnebels zurück. Der Rest geht mit dem ebenfalls noch die Öldämpfe enthaltenden Gas über Leitung 8 zum Wärmetauscher 9, in dem eine erste Erwärmung des Gases erfolgt. Anschließend wird das Gas im Wärmetauscher 4 gegen aus dem Kompressor 2 austretendes Gas soweit erwärmt, daß der verbliebene Ölnebel vollständig verdampft.

Daß jetzt ölnebelfreie, öldampfhaltige Gas wird in den Adsorber 10 eingeleitet, der mit einem Adsorptionsmittel, beispielsweise Silicagel oder aktivierter Tonerde, gefüllt ist. Aus dem erhitzten Gas werden dabei an diesen Adsorptionsmitteln die Öldämpfe vollständig adsorbiert, so daß ein ölfreies Gas über Leitung 11 aus dem Adsorber 10 abgezogen wird. Zur Ausnützung der Wärme dieses Gases wird es noch durch den Wärmetauscher 9 geleitet, wo es das vom Abscheider 6 kommende Gas anwärmt.

Das im Adsorber 10 verwendete Adsorptionsmittel kann nach seiner vollständigen Beladung entweder verworfen oder beispielsweise durch Abbrennen regeneriert werden.

**Ansprüche**

1. Verfahren zur Entfernung von Schmiermittelnebeln und Schmiermitteldämpfen aus einem verdichteten Gas unter Verwendung eines Ölfilters und eines Adsorbers, dadurch gekennzeichnet, daß das Gas nach Durchlaufen des Ölfilters soweit erwärmt wird, daß noch enthaltener Ölnebel vollständig verdampft, bevor das Gas durch den Adsorber geleitet wird.

2. Verfahren nach Anspruch 1, dadurch gekennzeichnet, daß die Kompressionswärme des verdichteten Gases mindestens teilweise für die Erwärmung des Gases herangezogen wird.

3. Verfahren nach Anspruch 1 oder 2, dadurch gekennzeichnet, daß das Gas nach Durchlaufen des Ölfilters zunächst durch Wärmetausch mit aus dem Adsorber austretenden Gas vorgewärmt wird.

## Claims

1. A process for removing lubricant mists and lubricant vapours from a compressed gas by means of an oil filter and an adsorber, characterised in that after passage through the oil filter, the gas is heated to such an extent that residual oil mist is completely vaporised before the gas is passed through the adsorber.

2. A process as claimed in Claim 1, characterised in that the heat of compression of the compressed gas is at least in part utilised for the heating of the gas.

3. A process as claimed in Claim 1 or Claim 2, characterised in that, after passing through the oil filter, the gas is first pre-heated by heat exchange with the gas leaving the adsorber.

## Revendications

1. Procédé d'élimination de brouillards et vapeurs d'huile lubrifiante contenus dans un gaz comprimé, à l'aide d'un filtre à huile et d'un adsorbeur, caractérisé en ce que le gaz, après passage dans le filtre à huile et avant son entrée dans l'adsorbeur est chauffé jusqu'à ce que le brouillard d'huile qu'il contient soit totalement vaporisé.

2. Procédé selon la revendication 1, caractérisé en ce que la chaleur de compression du gaz comprimé est au moins en partie utilisée pour le chauffage des gaz.

3. Procédé selon la revendication 1 ou 2, caractérisé en ce que le gaz, après son passage dans le filtre à huile, est réchauffé par échange thermique avec le gaz quittant l'adsorbeur.